# NEUE EUROPÄISCHE PATENTSCHRIFT

(11) **EP 1 275 864 B2**
(45) Veröffentlichungstag und Bekanntmachung des Hinweises auf die Entscheidung über den Einspruch: **27.10.2010**
(45) Hinweis auf die Patenterteilung: 27.10.2004
(21) Anmeldenummer: 01116558.6
(22) Anmeldetag: 09.07.2001
(51) Int. Cl.: F16C 33/10, F02F 1/20

(54) **Werkstück mit einer tribologisch beanspruchbaren Fläche und Verfahren zur Herstellung einer solchen Fläche**
Workpiece with a tribologically stressed surface and method of manufacture such a surface
Pièce avec une surface chargée tribologiquement at procédé de fabrication une telle surface

(43) Veröffentlichungstag der Anmeldung: 15.01.2003
(73) Patentinhaber: Gehring Technologies GmbH, 73760 Ostfildern (DE)
(72) Erfinder: Klink, Ulrich, 72639 Neuffen (DE); Flores, Gerhard, 73760 Ostfildern (DE); Abeln, Tobias, 70327 Stuttgart (DE); Kull, Oliver, 73760 Ostfildern (DE)
(74) Vertreter: Dreiss

(56) Entgegenhaltungen:
- WO-A-98/14710
- WO-A1-99/05424
- DE-A- 19 614 328
- DE-A- 19 712 432
- DE-C- 19 833 646
- FR-A- 2 777 019
- GB-A- 2 340 547
- US-A- 1 746 020
- US-A- 1 882 956
- US-A- 5 697 206
- PATENT ABSTRACTS OF JAPAN vol. 008, no. 054 (M-282), 10. März 1984 (1984-03-10) & JP 58 207520 A (HITACHI SEISAKUSHO KK), 3. Dezember 1983 (1983-12-03)
- U.KLINK, G.FLORES; MASCHINENFABRIK GEHRING GMBH &CO.OSTFILDERN LASER-STRUKTURIEREN VON ZYLINDERLAUFBAHNEN 01 Oktober 1999, ESSEN- VULKAN VERLAG, ISSN 380278644 Seiten 12 - 14
- TU DRESDEN: 'Honen und Laser-Strukturieren' PRÄZISIONSBEARBEITUNG VON BOHRUNGEN 23 Juni 2000 - 23 Juni 2000, DRESDEN, Seiten S1 - S23
- GERHARD FLORES GRUNDLAGEN UND ANWENDUNGEN DES HONENS 01 Januar 1992, VULKAN VERLAGE ESSEN, ISSN 380272904 Seiten 220 - 226
- E.SECK, DR.J.STOBEL: 'Diamant Fluidstrahl Glätthonung' MOTORTECHNISCHE ZEITSCHRIFT 62 01 Januar 2001, Seiten 184 - 189

## Beschreibung

Die Erfindung bezieht sich auf ein Verfahren zur Herstellung einer Kolbenlauffläche in einem Zylinder, wie es aus dem Aufsatz von U. Klink und G. Flores "Laser - Strukturieren von Zylinderlaufflächen, In: 9. Int. Braunschweiger Feinbearbeitungskolloquium v. 12. - 14.10.1999 (Schriftenreihe des IWF, ISBN 3-8027-8644-0) und den veröffentlichten Unterlagen zu einem Vortrag von G. Flores, Honen und Laserstruk- turieren, an der TH Dresden am 23.6.200 bekannt geworden ist.

Die Kolbenlaufbahnen in Verbrennungsmotoren und die Flächen stark belasteter Gleitlager sind als tribologisch beanspruchbare Flächen ausgeführt. Dabei kommt es darauf an, bei allen Arbeitsbedingungen eine ausreichende Schmierung durch einen Ölfilm zu gewährleisten und den Reibwiderstand der sich relativ zueinander bewegenden Teile möglichst gering zu halten.

In der WO 98-14710 ist ein Verfahren zur Gestaltung von Werkstückoberflächen an einem Lager beschrieben, wobei die tragende Lagerfläche mit Mikroporen versehen ist, die eine Tiefe zwischen 2 µm bis 10 µm aufweisen. Derartige Mikroporen werden beispielsweise durch Laserstrahlen erzeugt.

In der DE 198 33 646 C1 ist eine Zylinderlaufbahn einer Zylinderbohrung in einem Verbrennungsmotor beschrieben, welche mittels Honen mit einer Kreuzriefenstruktur ausgebildet ist. Um eine Schmierung des Kolbens in der Zylinderbohrung während des Motorbetriebs in jeder Bewegungsphase in einfacher Weise zu gewährleisten, wird eine Zylinderlaufbahn mit ölschmiertaschen versehen. Im Bereich des oberen Totpunktes eines in der Zylinderbohrung geführten Hubkolbens sowie im Bereich von in der Laufbahn befindlichen Einlaß-/Auslaßbohrungen überlagern diese Ölschmiertaschen die Kreuzriefenstruktur. Damit sind die Ölschmiertaschen ineinander übergehend.

In der DE 196 14 328 A1 ist ein Verfahren zum Beschichten und/oder spanabhebenden Bearbeiten von vorbehandelten Werkstück-Oberflächen beschrieben. Bei diesem Verfahren ist eine vorbereitende Oberflächenbehandlung vorgesehen, um die Haftung der aufgebrachten Schicht oder die spanabhebende Bearbeitung zu verbessern. Anstelle einer für diesen Zweck bekannten mechanischen oder elektrochemischen Aufrauhung der Werkstück-Oberfläche ist eine Behandlung mit Laserstrahlen vorgesehen, bei der die Oberfläche in einem regelmäßigen Muster strukturiert wird. Das Muster kann der jeweiligen Endbehandlung optimal angepaßt werden.

Die GB 2 340 547 A offenbart einen Zylinder für einen Verbrennungsmotor, der in einem vorgegebenen Bereich Vertiefungen in der Zylinderoberfläche besitzt. An den die Vertiefung umgebenden Bereichen ist die Zylinderwandung glatt ausgebildet.

Die FR 2 777 019 A offenbart ein Verfahren zur Bearbeitung der Oberfläche eines Graugußwerkstücks mit einem Laser. Mittels des Lasers wird die Oberfläche des Werkstücks bis zu einer vorgegebenen Tiefe umgeschmolzen, um so Graphitlamellen freizulegen. Nach der Laserbearbeitung können in einem weiteren Bearbeitungsschritt Riefen auf dem Werkstück, beispielsweise der Lauffläche eines Zylinders erzeugt werden.

Der vorliegenden Erfindung liegt die Aufgabe zugrunde, ein Verfahren der eingangs genannten Art zu schaffen, mit dem ein Wertstück mit einer tribologisch beanspruchbaren Fläche erzeugt werden kann durch die auch unter ungünstigen Arbeitsbedingungen relativ zueinander bewegter Teile eine sichere Schmierung durch ausreichenden hydrodynamischen Druck gewährleistet ist.

Diese Aufgabe wird durch ein Verfahren mit den Merkmalen des Anspruchs 1 gelöst.

Die Erfindung ist durch Taschen mit unterschiedlichen Formen realisierbar. Wesentlich ist, daß die Taschen als geschlossene Mikrodruckkammern ausgebildet sind und die Taschen in der Draufsicht eine längliche Erstreckung aufweisen. Vorteilhaft ist dabei, daß ein Festkörperkontakt weitgehend vermieden wird. Dabei kann die Strukturierung in verschiedenen Abschnitten der Fläche unterschiedlich sein, wobei in Abschnitten mit geringerer Relativgeschwindigkeit des Körpers zum Werkstück die Anzahl und/oder Größe der Taschen gesteigert ist. Dabei ist es möglich, die Tiefe und/oder Abstände der Taschen unterschiedlich und insbesondere in Abhängigkeit der Relativgeschwindigkeit des Gegenkörpers zu graduieren.

Als bevorzugte Taschenformen werden solche angesehen, die als Streifen mit im wesentlichen parallelen Seitenrändern oder spitze Dreiecke gestaltet sind. Alternativ hierzu kommen auch andere Taschenformen in Betracht, von denen hier beispielsweise die Form eines Ovals oder einer Raute zu nennen sind. Um eine möglichst große Wirkung des hydrodynamischen Drucks zu erreichen, ist es vorteilhaft, daß die Längserstreckung der Taschen im wesentlichen quer zur Bewegungsrichtung des Gegenkörpers verläuft. Dabei sind die Taschen mit einer ihrer Längsrichtung zur Orthogonalen zur Bewegungsrichtung leicht geneigt, wobei der Winkel zwischen der Orthogonalen und der Längsseite <1° beträgt und vorzugsweise zwischen 0,1° und 0,7° liegt.

Es kann außerdem zweckmäßig sein, daß der Taschenboden bezogen auf eine durch die tragenden Bereiche der Fläche gebildete Ebene in Längsrichtung der Tasche und längs der Bewegungsrichtung des Gegenkörpers geneigt verläuft. Die Adhäsion des Öls an der Taschenwandung bzw. dem Boden ist durch die Rauheit der Tasche beeinflußbar.

Das Verfahren ist durch die Bearbeitungsschritte und ihre Reihenfolge definiert. Es kann sowohl auf einer ebenen als auch auf einer gewölbten Fläche angewendet werden. Das Verfahren umfaßt folgende Hauptarbeitsschritte, nämlich Vorbearbeiten wie beispielsweise Vorhonen, Drehen, Vorschleifen oder Fräsen, Strukturieren, insbesondere durch Laserbearbeitung, Elektronenstrahlbearbeitung oder Funkenerosion sowie Fertigbearbeiten in zwei Stufen, nämlich Entgraten und Endbearbeiten. Zum Entgraten können Bürsten oder Entgratleisten eines Honentgratwerkzeugs zum Einsatz kommen und das Endbearbeiten erfolgt beispielsweise durch Honen, Schleifen oder Polieren. Eine Vorbearbeitung wird durchgeführt, um den tribologischen Flächen ihre geometrische Genauigkeit zu geben. Zu beachten ist, daß die Rauheit von der Vorbearbeitung vor dem Strukturieren geringer ist als die vorgesehene Strukturtiefe. Andernfalls würde sich kein deutlicher Kontrast zwischen Struktur und den Bereichen der tragenden Fläche und keine geschlossene Druckkammer ergeben. Der Arbeitsschritt der Vorbearbeitung erfolgt mit definierter Schneide, z.B. Feinbohren, Fräsen usw., oder mit unbestimmter Schneidengeometrie wie z.B. Vorhonen oder Schleifen.

Das Einbringen von geschlossenen Taschen kann mit Laserstrahlung durchgeführt werden. Die Formabmessung, Abstände und Richtung der Taschen ist abhängig von der tribologischen Bedingung des Systems, worauf später noch eingegangen wird.

Die Fertigbearbeitung erfolgt aus den Gründen, daß durch das Entgraten die Schmelzaufwürfe an den Kanten der Mikrodruckkammern abgetragen werden und die Oberfläche zwischen den Taschen auf die gewünschte Rauheit gebracht wird, was in der Regel ein Glätten bedeutet, in einigen Fällen aber auch ein Aufrauhen sein kann. Diese Bearbeitung erfolgt durch einen Feinbearbeitungsprozeß wie Honen, Polieren oder Schleifen, wobei diese Nachbearbeitung notwendig ist, da die Höhe der Schmelzaufwürfe an den Kanten der Mikrodruckkammern höher ist als die Endrauhigkeit, die sogenannte Funktionsrauhigkeit der zwischen den Taschen liegenden Funktionsflächen. Mit abnehmender Rauhheit wird auch die Schmierspaltedicke minimiert, ab der bereits hydrodynamische Vollschmierung möglich ist.

Das Entgraten der Strukturkanten kann auf einer Honmaschine z.B. durch Anordnung einer Doppelzustelleinrichtung ausgeführt werden. Diese Doppelzustelleinrichtung arbeitet elektromechanisch/hydraulisch. In der ersten Phase zum Entgraten wird elektromechanisch zugestellt, in der zweiten Zustellphase zum Endbearbeiten erfolgt dies hydraulisch. Dabei wird der erste Leistensatz, der Entgratleisten aufweist, elektromechanisch zugestellt. Die Entgratleisten sind entsprechend der Länge des strukturierten Abschnitts kurz und die ausgeführte Hubbewegung ist derart bemessen, daß der Verfahrensschritt Entgraten nur in dem strukturierten Bereich durchgeführt wird. Dabei kann die Auslegung der Entgratleisten ganz dieser grobspanenden Abtragung angepaßt sein. Der Umfang der Entgratbearbeitung kann entweder durch Vorgabe einer bestimmten Zeit oder in Abhängigkeit der Anzahl der Hubbewegungen durchgeführt werden. Anstelle eines Doppelzustellwerkzeugs mit Entgratleisten und Glättleisten kann auch ein Honwerkzeug mit geeigneten Entgratleisten auf einer separaten Spindel vorgesehen sein. Dabei werden die Leisten lediglich mit niedrigen Drücken beaufschlagt, um die Flächenpressung an den erhabenen Graten niedrig zu halten. Das Entgraten kann jedoch auch mit Bürsten oder Werkzeugen mit definierter Schneidengeometrie durchgeführt werden.

Die Leisten zum Endbearbeiten können in einzelne Leistenabschnitte unterteilt sein, welche jeweils unabhängig voneinander federnd gelagert sind. Dabei werden sechs bis acht Leistenabschnitte pro Leiste als zweckmäßig angesehen, die durch die geringe Länge eine Anpassung des Schneidbelages an die Welligkeit zu bearbeitenden Fläche ermöglichen. Dadurch wird eine gleichmäßige Rauheit der Oberfläche erreicht.

Die geschlossenen Mikrodruckkammern und die Gestaltung der Übergänge von den Taschen zur tragenden Fläche bilden die geeignete tribologische Struktur, welche hydrodynamischen Druck wirkungsvoll aufbauen kann. Neben den geschlossenen Mikrodruckkammern sind als weitere Voraussetzungen für das Bestehen einer hydrodynamischen Schmierung die Relativgeschwindigkeiten von Gegenkörper und Lauffläche, eine ausreichende Schmierstoffmenge zwischen den Gleitflächen und die Normalkraft zwischen Lauffläche und Gegenkörper anzusehen. Die strukturierte Fläche im Verhältnis zur nicht strukturierten Fläche ist ein wesentlicher Parameter für das Zustandekommen der hydrodynamischen Schmierung. Mit zunehmender Geschwindigkeit wird ein abnehmender Taschenflächenanteil benötigt, das heißt, bei geringer Geschwindigkeit ist eine große Strukturdichte und bei großer Geschwindigkeit eine geringe Strukturdichte erforderlich.

Ausführungsbeispiele der Erfindung sind nachstehend anhand der Zeichnung näher erläutert. In der Zeichnung zeigt:
- Fig. 1: die Darstellung unterschiedlicher Taschenformen im Längs- und Querschnitt,
- Fig. 2: eine vergrößerte Darstellung eines Ausschnitts einer Kolbenlaufbahn und eines mit einem Kolbenring versehenen Kolbens,
- Fig. 3: die Anordnung von Taschen mit unterschiedlicher Tiefe,
- Fig. 4: verschiedene Rauhigkeiten von Taschen,
- Fig. 5: unterschiedliche Strukturen mit gleichen Taschenformen,
- Fig. 6: eine schematische Darstellung des Zwickelbereichs im oberen Totpunkt eines Kolbens in einem Zylinder,
- Fig. 7: eine schematische Darstellung einer Maschine mit zwei Fertigungsstufen,
- Fig. 8: eine schematische Darstellung eines Lasers in einer zu bearbeitenden Bohrung.

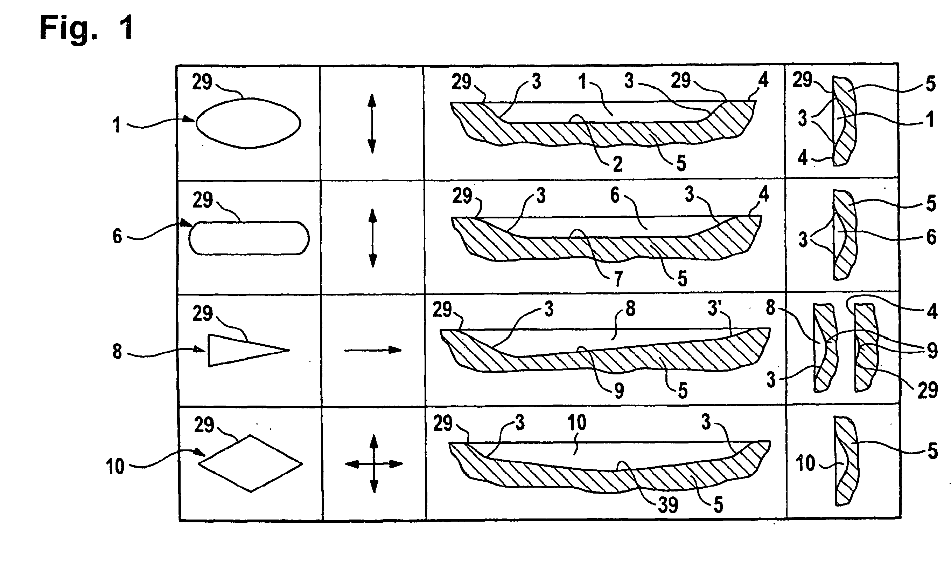

Die Fig. 1 zeigt unterschiedliche Ausführungen von Taschen, wobei in der linken Spalte die Form der Draufsicht in der daneben liegenden Spalte die Bewegungsrichtung des Körpers, daneben der Längsschnitt und ganz rechts der Querschnitt der Taschen dargestellt ist. Eine in der Draufsicht ovale Tasche 1 weist gemäß Darstellung im Längsschnitt und im Querschnitt einen Boden 2 mit verrundeten Übergängen 3 zu einer tragenden Fläche 4 eines Werkstückes 5, beispielsweise eines Zylinders, auf. Am außen liegenden Ende der verrundeten Übergänge 3 wird ein geschlossener Umfangsrand 29 gebildet, der die Flächenkontur vollständig umgibt. Aufgrund der Ovalform der Tasche 1 ist der Aufbau des hydrodynamischen Drucks bevorzugt in der Richtung des Gegenkörpers quer zur Längsachse der Tasche.

In Fig. 1 ist außerdem eine Tasche 6 dargestellt, die in der Draufsicht die Form eines länglichen Streifens mit parallelen Seitenkanten aufweist. Gemäß dem Längsschnitt weist die Tasche 6 einen ebenen Boden 7 auf, der an seinen Enden jeweils verrundete Übergänge 3 zu der tragenden Fläche 4 besitzt. Auch im Querschnitt, der in der rechten Spalte dargestellt ist, besitzt die Tasche 6 verrundete Übergänge 3. Wie anhand der Pfeile in der zweiten Spalte deutlich wird, ist bei dieser Taschenform die bevorzugte Bewegungsrichtung im wesentlichen orthogonal zur Längserstreckung der Tasche 6. Auch bei dieser Ausführung ist der geschlossene Umfangsrand 29 vorgesehen.

Außerdem ist in Fig. 1 eine Tasche 8 in Form eines spitzen Dreiecks gezeigt, wobei die Bewegungsrichtung bevorzugt in Richtung auf die Spitze ausgerichtet sein sollte. Wie der Längsschnitt zeigt, weist die Tasche 8 einen Boden 9 auf, der bezogen auf die durch die tragende Fläche 4 gebildete Ebene geneigt verläuft. Die Neigung ist derart, daß der Boden 9 zur Spitze der Dreiecksform hin ansteigt. An beiden Enden der Längserstreckung weist die Tasche 8 verrundete Übergänge 3, 3' auf, diese sind jedoch aufgrund der unterschiedlichen Tiefe der Tasche 8 an beiden Enden unterschiedlich. Die Querschnittsform der Tasche 8 ist in zwei Ebenen dargestellt, wobei ein Schnitt in dem Bereich mit der größten Taschentiefe und ein Schnitt nahe dem spitzen Ende dargestellt ist, wobei ebenfalls verrundete Übergänge vorgesehen sind. Der geschlossene Umfangsrand 29 umgibt die Flächenkontur.

Als weitere Ausführung ist in Fig. 1 eine Tasche 10 dargestellt, die in der Draufsicht die Form einer Raute hat, wobei die bevorzugte Bewegungsrichtung jeweils in Richtung der Längsachse und der Querachse ist. Der Längsschnitt der Tasche 10 zeigt einen Verlauf eines Bodens 39 von der Mitte jeweils leicht ansteigend in Richtung der Enden, wobei sich daran die verrundeten Übergänge der Tasche 10 zu der tragenden Fläche 4 anschließen. Durch diesen Verlauf der Kontur des Bodens 39 hat die Tasche 10 zwei bevorzugte Bewegungsrichtungen des Gegenkörpers. Die Längs- und Querschnittsgestalt der gezeigten Beispiele weist in Laufrichtung verrundete Übergänge 3 von dem Boden 2, 7, 9, 39 der Tasche 1, 6, 8 oder 10 zu den tragenden Bereichen 4 auf. Die Flächengestalt der Tasche 1, 6, 8 bzw. 10 ist abhängig von der Bewegungsrichtung des Gegenkörpers.

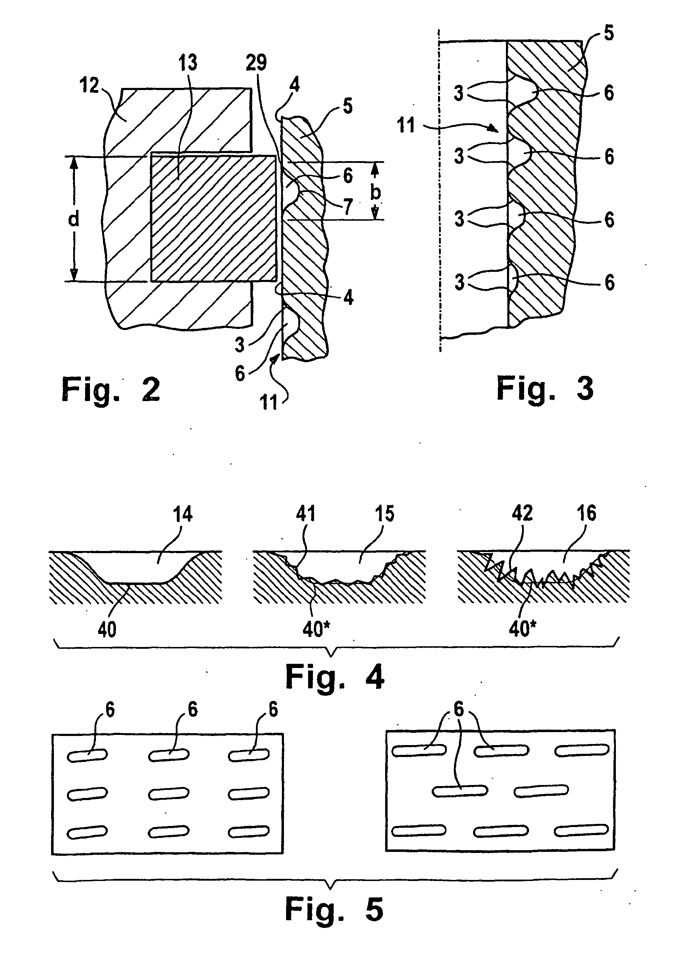

Die Fig. 2 zeigt einen Ausschnitt einer Kolbenlauffläche 11 in einem Werkstück 5 sowie einen Kolben 12 mit einem Kolbenring 13. An der Kolbenlauffläche 11 sind Taschen 6 vorgesehen, die vorzugsweise die Gestalt der Taschen 6 in Fig. 1 aufweisen und im Querschnitt gesehen verrundete Übergänge 3 zu den tragenden Flächen 4 besitzt. Die Breite b der Tasche 6 ist zum Aufbau des hydrodynamischen Druckes erheblich kleiner als eine Dicke d des Kolbenringes 13, wobei die Dicke d beispielsweise das 30fache der Breite b der Tasche 6 betragen kann oder mehr.

Die Breite, Länge und Tiefe einer Tasche werden durch die tribologischen Gegebenheiten bestimmt. Die Breite einer Tasche ist stets wesentlich geringer zu bemessen als die ununterbrochene Länge des überdeckenden Körpers. Ein Beispiel ist die Taschenbreite im Zwickelbereich einer Kolbenlaufbahn wie in Fig. 2 gezeigt. Dabei weist die Struktur eine Breite der Taschen bis 60 µm auf, wobei die Dicke d des Kolbenringes etwa 1,75 mm beträgt. Die Tiefe einer Tasche bestimmt das tribologisch relevante Schmierstoffvolumen. Das Taschenvolumen soll stets kleiner sein als das verfügbare Schmierstoffvolumen. Beide Volumen sind als mm³/cm² auf die Fläche zu beziehen.

Zur Reduzierung des Schmierstoffvolumens wird vorzugsweise die Taschentiefe minimiert. Tribologisch wären bei einem Kolben in einem Zylinder ca. 10 µm zur Ausbildung einer hydrodynamischen Vollschmierung ausreichend. Berücksichtigt man jedoch trotz tribologischer Optimierung langzeitig den zu erwartenden Verschleiß, so sind die Taschen mit ca. 20 µm bis 35 µm Tiefe auszulegen. Wie bereits oben zu Fig. 2 beschrieben, kommen daher auch Taschentiefen von 60 µm in Betracht. Entsprechend der Geschwindigkeit bei der Strukturdichte läßt sich die Struktur gleichmäßig anordnen, jedoch in der Tiefe entsprechend der Geschwindigkeit graduieren. Das Volumen pro Flächenanteil der Lauffläche sollte im Bereich des oberen Totpunktes wegen der dort gegen Null gehenden Relativgeschwindigkeit verhältnismäßig groß sein und mit zunehmender Geschwindigkeit und damit größerem Abstand vom oberen Totpunkt geringer werden.

Ein Beispiel der Graduierung der Taschen 6 bezüglich deren Tiefe ist in Fig. 3 dargestellt. Es ist daraus ersichtlich, daß im oberen Bereich die Taschen 6 eine wesentlich größere Tiefe aufweisen und damit ein erheblich größeres ölvolumen aufnehmen können. Mit zunehmendem Abstand vom oberen Totpunkt nimmt dann auch die Tiefe der Taschen 6 ab, da mit zunehmender Geschwindigkeit des Kolbens ein geringeres ölvolumen für den hydrodynamischen Druck ausreichend ist.

In Fig. 4 sind Taschen 14, 15, 16 mit unterschiedlicher Rauhigkeit dargestellt. Während die Tasche 14 eine relativ glatte Kontur 40 aufweist, ist die Tasche 15 mit einer rauheren Oberfläche 41 versehen, wobei ein mittlerer Verlauf 40* der Kontur wiederum derjenigen der Tasche 14 entspricht. Auch bei größerer Rauheit einer Oberfläche 42 der Tasche 16 ergibt sich ein vergleichbarer mittlerer Verlauf 40*. Die Oberflächenrauhheit von Boden und Wandung der Taschen 14, 15, 16 bestimmt die Kontaktoberfläche zum Ölfilm. Damit ist auch die Adhäsion beeinflußbar, das heißt, eine rauhe Oberfläche ermöglicht eine zunehmende Schmierfilmadhäsion. Diese Eigenschaft wird genutzt, um zwischen Festkörper und Schmierfilm eine Relativbewegung zu vermeiden, so daß sich die Relativbewegung nur im Ölfilm durch Verschiebung von Flüssigkeitsteilchen vollzieht.

Die Fig. 5 zeigt zwei verschiedene Arten der Anordnung von länglichen Taschen 6, wobei in der in Fig. 5 linken Darstellung die Taschen jeweils aufeinander folgenden Ebenen ausgerichtet untereinander liegen und in der Darstellung in Fig. 5 rechts die Taschen 6 jeweils zweier aufeinander folgender Ebenen gegeneinander versetzt sind. Somit überdecken die Taschen der nächstfolgenden Ebene die Lücken zwischen zwei Taschen 6 der vorausgehenden Ebene. Durch die geometrische Positionierung der Taschen 6 kann festgelegt werden, ob der Schmierspalt eine ausschließliche Schmierfunktion oder auch eine Dichtfunktion übernehmen kann. Die nebeneinander angeordneten Schmiertaschen ermöglichen im Bereich der jeweiligen Taschenreihe einen Schmierfilm, zwischen den Taschen jedoch wird der Aufbau eines Schmierfilms nicht begünstigt. Ein spaltfüllender Schmierfilm entsteht nur im Bereich der Taschen. Sofern neben der Schmierfunktion zusätzlich eine Dichtfunktion gewünscht wird, so sollten die Taschen versetzt angeordnet werden, wie dies in der rechten Darstellung in Fig. 5 gezeigt ist. Damit wird ein unterbrochener Schmierfilm erreicht und somit auch die Möglichkeit des Abdichtens. Die Anordnung der Taschen 6 selbst kann sowohl parallel zur Flächenkante oder geneigt zu dieser sein. Bezogen auf den Umfang eines Zylinders kann dabei die Steigung 2 mm betragen. Durch eine leicht geneigte Anordnung der Taschen 6 wird erreicht, daß die Kolbenringkanten beim Überfahren der Längskanten der Taschen 6 im Moment nur einen Punkt der Kante überfahren. Vorzugsweise liegt dieser Winkel α in der Größenordnung <1°, wobei insbesondere als Steigungswinkel α der Bereich zwischen 0,1° bis 0,7° als besonders geeignet angesehen wird.

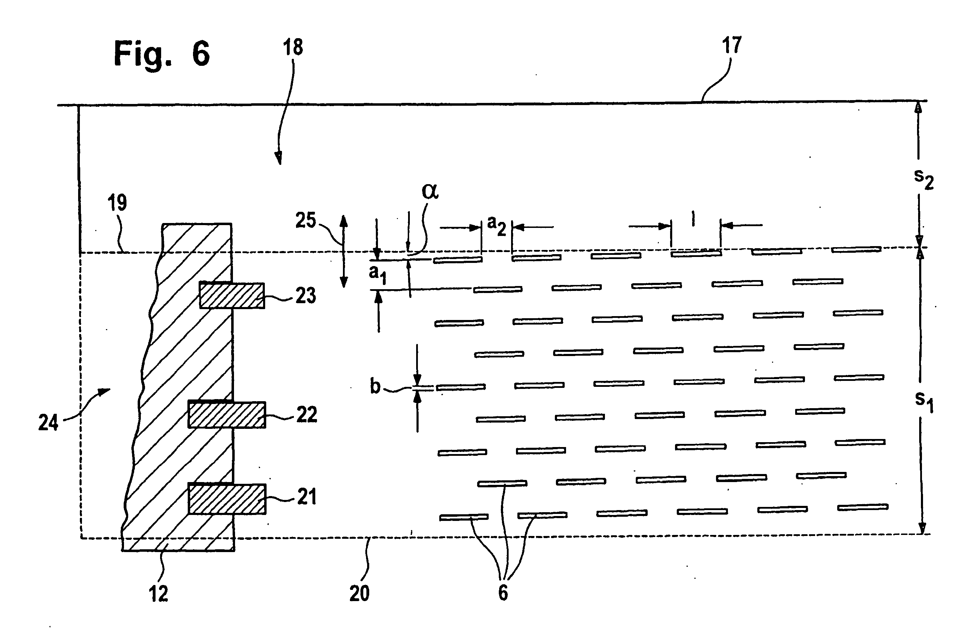

In Fig. 6 ist eine schematische Darstellung einer Zylinderbohrung 18 gezeigt, deren oberes Ende mit 17 bezeichnet ist. Diese Zylinderbohrung 18 bildet den Brennraum eines Verbrennungsmotors. Mit den Linien 19 und 20 ist jeweils die Begrenzung eines dazwischen liegenden Zwickelbereichs 24 angegeben, in dem der Kolben 12 seinen oberen Totpunkt erreicht. Die in Fig. 6 gezeigte Lage des Kolbens 12 entspricht diesem oberen Totpunkt. Der Kolben 12 ist mit einem aus drei Kolbenringen 21, 22, 23 gebildeten Ringpaket versehen. In dem Zwickelbereich 24 ist eine Strukturierung aus einer Vielzahl von Taschen 6 vorgesehen, die eine längliche Erstreckung haben, wobei deren Längsachse im wesentlichen quer zur Bewegungsrichtung 25 des Kolbens 12 verläuft.

Die Taschen 6 sind in einem regelmäßigen Muster angeordnet, welches die Strukturierung bildet, wobei die Taschen 6 in mehreren Ebenen untereinander angeordnet sind. Wie aus Fig. 6 deutlich wird, sind die Taschen 6 zweier aufeinander folgender Ebenen versetzt gegeneinander angeordnet, so daß ein Abstand a₂ zwischen zwei nebeneinander liegenden Taschen 6 von einer Tasche 6 der nächsten Ebene überdeckt wird. Der Abstand zwischen zwei Ebenen von Taschen 6 ist mit a₁ bezeichnet. Die Abstände a₁ und a₂ sind im Ausführungsbeispiel gleich groß und können etwa 2 mm betragen. Die Taschen 6 besitzen eine Länge 1 und eine Breite b. Die Länge 1 kann beispielsweise 3 mm betragen und die Breite b liegt beispielsweise im Bereich von 40 µm bis 60 µm. Der Abstand s₁ der den Zwickelbereich begrenzenden Linien 19 und 20 beträgt beispielsweise 18 mm und der Abstand s₂ des Zwickelbereichs von der Oberkante 17 der Zylinderbohrung 18 etwa 9 mm. Wie aus Fig. 6 deutlich wird, verlaufen die Ebenen der Taschen 6 leicht geneigt zu der Orthogonalen der Bewegungsrichtung 25 des Kolbens 12, wobei der Winkel mit α bezeichnet ist. Wie bereits vorstehend genannt, ist dieser Winkel <1°.

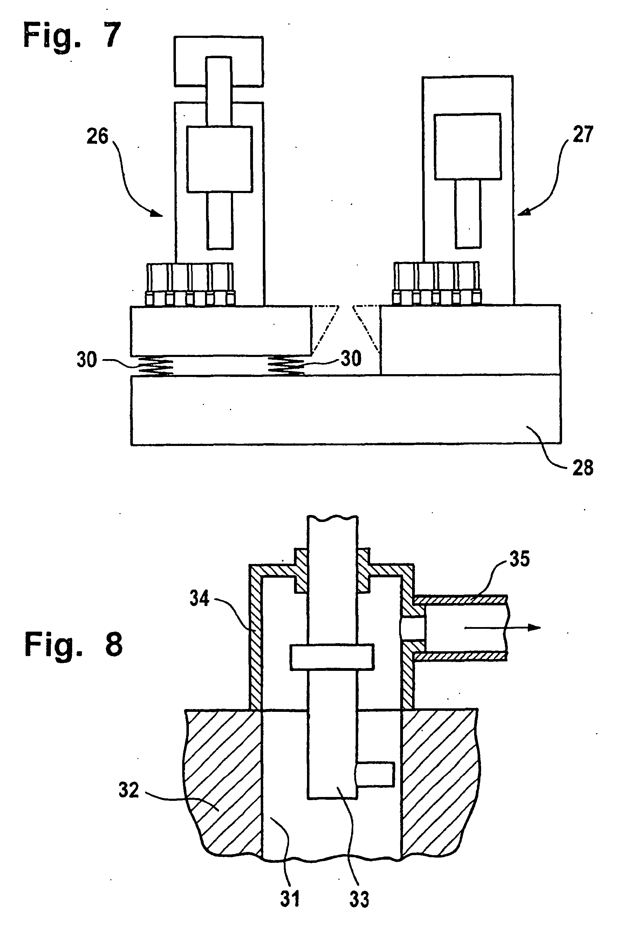

Die Fig. 7 zeigt ein Ausführungsbeispiel einer Maschine für die Bearbeitungsschritte der Strukturierung und der anschließenden Fertigbearbeitung. Für die Strukturierung ist eine Laserstation 26 vorgesehen und für die Feinbearbeitung, nämlich dem Entgraten und dem Glätten, eine Honstation 27. Die Laserstation 26 und Honstation 27 befinden sich auf einem gemeinsamen Maschinenbett 28. Während die Honstation 27 mit ihrem Arbeitstisch unmittelbar auf dem Maschinenbett 28 angeordnet ist, ist die Laserstation 26 über schwingungsentkoppelnde Mittel 30 auf dem Maschinenbett 28 abgestützt. Diese Schwingungsentkopplung zwischen der Laserstation 26 und dem Maschinenbett 28 kann beispielsweise durch mechanische oder pneumatische Dämpfungselemente erreicht werden. Die Laserstation 26 arbeitet somit als vom Maschinenbett 28 schwingungsentkoppelte, in sich starre Einheit. Auf diese Weise wird erreicht, daß der Laserstrahl seine absolute Position zu der zu bearbeitenden Oberfläche einhält. Durch die Positioniergenauigkeit kann damit exakt die gewünschte Strukturierung der Oberfläche erzeugt werden.

Die Laserstation 26 ist bezüglich ihres Aufbaus an sich bekannt und umfaßt eine übliche Strahlquelle mit Strahlführung mit den hierfür erforderlichen optischen Komponenten.

Die Fig. 8 zeigt einen in einer Bohrung 31 eines Werkstücks 32 angeordneten Laserkopf 33. Über dem oberen Ende der Bohrung 31 befindet sich eine Saugglocke 34, an die ein Saugrohr 35 angeschlossen ist. Während der Laserbearbeitung wird durch das Saugrohr 35 und die Glocke 34 die Bohrung 31 mit Unterdruck beaufschlagt, so daß die bei der Laserbearbeitung aus der Zylinderwandung gelösten Partikel abgesaugt werden. Eine Ablagerung am Laserkopf 33 wird dadurch reduziert.

## Patentansprüche

1. Verfahren zur Herstellung einer Kolbenlauffläche in einem Zylinder mit folgenden Verfahrensschritten:
(a) Vorbearbeitung
(b) Strukturierung durch Erzeugen von Taschen mittels Laserbearbeitung in dem tribologisch beanspruchten, Zwickelbereich (24) in dem der Kolben seinen oberen Totpunkt erreicht,
(c) einer Fertigbearbeitung in zwei Stufen, nämlich
(c.1) einer ersten Stufe, die zum zur grobspanenden Abtragung der bei der Laserbearbeitung im oberen Zwickelbereich (24)entstandenen Schmelzaufwürfe an den Strukturkanten mittels Entgratleisten, die der Länge des strukturierten Abschnittes im oberen Zwickelbereich entsprechend kurz ausgebildet sind, dient, und
(c.2) einer zweiten Stufe zur Erzeugung der Funktionsrauigkeit an den tragenden Bereichen zwischen den Taschen durch einen Feinbearbeitungsprozess wie Honen, Polieren oder Schleifen.

2. Verfahren nach Anspruch 1,
**dadurch gekennzeichnet, daß** der Verfahrensschritt Entgraten in Abhängigkeit einer vorgegebenen Zeit oder der Anzahl von Hubbewegungen durchgeführt wird.

3. Verfahren nach Anspruch 1 oder 2,
**dadurch gekennzeichnet, daß** die Verfahrensschritte Entgraten und Endbearbeiten von Werkzeugeinsätzen an einer gemeinsamen Spindel ausgeführt werden.

4. Verfahren nach Anspruche 1 oder 2,
**dadurch gekennzeichnet, daß** der Verfahrensschritt Entgraten von einem auf einer separaten Spindel angeordneten Entgratleiste mit niedrigem Zustelldruck durchgeführt wird.

5. Verfahren nach Anspruche 1 oder 2,
**dadurch gekennzeichnet, daß** der Verfahrensschritt Entgraten mittels eines Reibwerkzeugs mit definierter Schneidengeometrie durchgeführt wird.

6. Verfahren nach Anspruche 1 oder 2,
**dadurch gekennzeichnet, daß** der Verfahrensschritt Endbearbeiten mittels eines Werkzeugs durchgeführt wird, das einzelne Honleistenabschnitte aufweist, die jeweils unabhängig voneinander federnd gelagert sind und sich somit der Welligkeit der strukturierten und entgrateten Fläche anpassen.

## Claims

1. Method for producing a piston running face in a cylinder, having the following method steps:
a) premachining
b) structuring by creating pockets by means of laser machining in the tribologically stressed nip region (24), in which the piston reaches its top dead center point,
c) finish-machining in two stages, namely
c.1) a first stage, which serves for coarse- removal of the melt ejections, occurring in the laser machining in the upper nip region (24), on the structured edges by means of deburring strips, which are embodied as short, corresponding to the length of the structured portion in the upper intermediate region; and
c.2) a second stage for creating the functional roughness on the load-bearing regions between the pockets by means of a fine-machining process such as honing, polishing, or grinding.

2. Method according to claim 1, **characterized in that** the method step comprising deburring is carried out as a function of a predetermined time or the number of strokes.

3. Method according to claim 1 or 2, **characterized in that** the method steps comprising deburring and final processing are performed by tool inserts on a common spindle.

4. Method according to claim 1 or 2, **characterized in that** the method step comprising deburring is carried out by a deburring bar arranged on a separate spindle and having a low feed pressure.

5. Method according to claim 1 or 2, **characterized in that** the method step comprising deburring is carried out by means of an abrasion tool having a defined blade geometry.

6. Method according to claim 1 or 2, **characterized in that** the method step comprising final processing is carried out by means of a tool which has individual honing bar sections which in each case independently of one another are spring-mounted and thus adapt to the waviness of the structured and deburred surface.

## Revendications

1. Procédé de réalisation d'une surface frottante d'un piston dans un cylindre, comportant les étapes suivantes :
a) pré-usinage,
b) structuration par réalisation de poches au moyen d'un usinage laser dans la zone de contact (24) sollicitée par effet tribologique, dans laquelle le piston atteint son point mort haut,
c) un usinage de finition en deux étapes, à savoir
c.1) une première étape qui est destinée à un usinage grossier par enlèvement de copeaux pour éliminer les protubérances, dues à la fusion du matériau et générées dans la zone de contact (24) supérieure pendant l'usinage laser, sur les arêtes structurées, au moyen de lames d'ébavurage qui sont réalisées avec une courte longueur de manière correspondante à la longueur de la partie structurée dans la zone de contact, et
c.2) une deuxième étape pour produire la rugosité fonctionnelle sur les zones portantes entre les poches, au moyen d'un processus d'usinage de finissage, tel que le rodage, le polissage ou la rectification.

2. Procédé selon la revendication 1, **caractérisé en ce que** l'on effectue l'étape d'ébavurage en fonction d'une période prédéterminée ou d'un nombre prédéterminé de mouvements.

3. Procédé selon la revendication 1 ou 2, **caractérisé en ce que** les étapes d'ébavurage et d'usinage final sont effectués par des inserts d'outil sur une broche commune.

4. Procédé selon la revendication 1 ou 2, **caractérisé en ce que** l'étape d'ébavurage est effectuée par une baguette d'ébavurage, agencée sur une broche séparée, avec une faible pression d'approche.

5. Procédé selon la revendication 1 ou 2, **caractérisé en ce que** l'on effectue l'étape d'ébavurage au moyen d'un outil de friction présentant une géométrie de taille définie.

6. Procédé selon la revendication 1 ou 2, **caractérisé en ce que** l'on effectue l'étape d'usinage final au moyen d'un outil qui présente des tronçons de baguette de rodage individuels qui sont montés avec effet élastique chacun indépendamment des autres et s'adaptent ainsi aux ondulations de la surface structurée et ébavurée.
